(19) Europäisches Patentamt
European Patent Office
Office européen des brevets

(11) **EP 4 749 694 A1**

(12) **EUROPEAN PATENT APPLICATION**

(43) Date of publication:
**27.05.2026 Bulletin 2026/22**

(21) Application number: **25215650.0**

(22) Date of filing: **13.11.2025**

(51) International Patent Classification (IPC):
$H01M\ 4/04^{(2006.01)}$    $H01M\ 4/133^{(2010.01)}$
$H01M\ 4/1393^{(2010.01)}$    $H01M\ 4/36^{(2006.01)}$
$H01M\ 4/38^{(2006.01)}$    $H01M\ 4/587^{(2010.01)}$

(52) Cooperative Patent Classification (CPC):
**H01M 4/587; H01M 4/0404; H01M 4/133;
H01M 4/1393; H01M 4/362; H01M 4/364;
H01M 4/386;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.11.2024 KR 20240166351**

(71) Applicant: **SAMSUNG SDI CO., LTD.
Yongin-si, Gyeonggi-do 17084 (KR)**

(72) Inventor: **KWON, Hyejin
17084 Yongin-si, Gyeonggi-do (KR)**

(74) Representative: **Michalski Hüttermann & Partner
Patentanwälte mbB
Kaistraße 16A
40221 Düsseldorf (DE)**

(54) **NEGATIVE ELECTRODE FOR RECHARGEABLE LITHIUM BATTERY, RECHARGEABLE LITHIUM BATTERY INCLUDING THE SAME, AND METHOD FOR MANUFACTURING NEGATIVE ELECTRODE FOR RECHARGEABLE LITHIUM BATTERY**

(57) Provided are a negative electrode for a rechargeable lithium battery, a rechargeable lithium battery including the same, and a method of manufacturing a negative electrode. A negative electrode includes a negative electrode current collector and a negative electrode active material layer on the negative electrode current collector. The negative electrode active material layer includes a first negative electrode active material layer and a second negative electrode active material layer, which are stacked on the negative electrode current collector, at least one of the first and second negative electrode active material layers has a DD (degree of divergence) value, a DD value of the second negative electrode active material layer is about 60% to about 120% of a DD value of the first negative electrode active material layer, and at least one of the first and second negative electrode active material layers has a DD value of 19 or more.

FIG. 6

EP 4 749 694 A1

**Description**

CROSS-REFERENCE TO RELATED APPLICATIONS

This patent application claims priority of Korean Patent Application No. 10-2024-0166351, filed on November 20, 2024.

BACKGROUND

The present disclosure relates to a negative electrode for a rechargeable lithium battery, a rechargeable lithium battery including the negative electrode, and a method for manufacturing a negative electrode for a rechargeable lithium battery.

The increasing presence of battery-powered electronics, such as, e.g., mobile phones, laptop computers, electric vehicles, and the like, has driven a rise in demand for rechargeable batteries provided with high energy density and high capacity. Accordingly, improving the performance of rechargeable lithium batteries may be advantageous.

Rechargeable lithium batteries typically include a positive electrode and a negative electrode, each electrode including an active material that allows intercalation and deintercalation of lithium ions, and an electrolyte solution, and produce electrical energy from redox reactions that take place as lithium ions are intercalated into or deintercalated from the positive electrode and the negative electrode.

SUMMARY

The present disclosure describes a negative electrode for a rechargeable lithium battery exhibiting desired or improved rate characteristics and desired or improved life characteristics.

The present disclosure also describes a method for manufacturing a negative electrode for a rechargeable lithium battery exhibiting desired or improved rate characteristics and desired or improved life characteristics.

An example embodiment of the present invention includes a negative electrode for a rechargeable lithium battery including a negative electrode current collector, and a negative electrode active material layer on the negative electrode current collector. The negative electrode active material layer includes a first negative electrode active material layer and a second negative electrode active material layer, which are stacked, e.g., sequentially stacked, on the negative electrode current collector. The first negative electrode active material layer includes a first carbon-based negative electrode active material, the second negative electrode active material layer includes a second carbon-based negative electrode active material, the first and second negative electrode active material layers each have a DD (degree of divergence) value represented by Equation 1 below, a DD value of the second negative electrode active material layer is in a range of about 60% to about 120% of a DD value of the first negative electrode active material layer, and the first and second negative electrode active material layers each have a DD value in a range of 19 or more.

$$\text{Equation 1:}$$

$$\text{DD (degree of divergence)} = (I_a/I_{total}) \times 100$$

In Equation 1 above, $I_a$ is a sum of peak intensities at $2\theta = 42.4 \pm 0.2°$, $43.4 \pm 0.2°$, $44.6 \pm 0.2°$, and $77.5 \pm 0.2°$ in XRD measurement using CuKα radiation, and $I_{total}$ is a sum of peak intensities at $2\theta = 26.5 \pm 0.2°$, $42.4 \pm 0.2°$, $43.4 \pm 0.2°$, $44.6 \pm 0.2°$, $54.7 \pm 0.2°$, and $77.5 \pm 0.2°$ in XRD measurement using CuKα radiation.

In an example embodiment of the present invention, a rechargeable lithium battery includes a positive electrode, a negative electrode, and a separator between the positive electrode and the negative electrode. The negative electrode includes a negative electrode current collector, and a negative electrode active material layer on the negative electrode current collector, the negative electrode active material layer includes a first negative electrode active material layer and a second negative electrode active material layer, which are stacked, e.g., sequentially stacked, on the negative electrode current collector. The first negative electrode active material layer includes a first carbon-based negative electrode active material, the second negative electrode active material layer includes a second carbon-based negative electrode active material, each of, or at least one of, the first and second negative electrode active material layers have a DD (degree of divergence) value represented by Equation 1 above, the first negative electrode active material layer has a DD value in a range of about 40 to about 60, and the second negative electrode active material layer has a DD value in a range of about 40 to about 60.

In an example embodiment of the present disclosure, a method for manufacturing a negative electrode for a rechargeable lithium battery includes preparing a negative electrode current collector, and forming a negative electrode active material layer on the negative electrode current collector. The forming of the negative electrode active material layer includes applying and orienting a first negative electrode slurry onto the negative electrode current collector to form a first unit layer, and applying and orienting a second negative electrode slurry onto the first unit layer to form a second unit layer. Each of, or at least one of, the first and second negative electrode slurries include a carbon-based negative electrode active material, the negative electrode active material layer includes a first negative electrode active material layer and a second negative electrode active material layer, which are stacked, e.g., sequentially stacked on the negative electrode current collector, each of, or at least one of, the first and second negative electrode active material layers have a DD (degree of divergence) value represented by Equation 1 above, a DD value of the second negative electrode active material layer is in a range of about 60% to about 120% of a DD value of the first negative electrode active material layer, and each of, or at least one of, the first and second negative electrode active material layers have a DD value in a range of 19 or more.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, help explain principles of the present disclosure. In the drawings:

FIG. 1 is a simplified conceptual view showing a rechargeable lithium battery according to example embodiments of the present disclosure;
FIGS. 2 to 5 are schematic views showing a rechargeable lithium battery according to an example embodiment, and FIG. 2 shows a cylindrical battery, FIG. 3 shows a prismatic battery, and FIGS. 4 and 5 show pouch-type batteries;
FIG. 6 is a cross-sectional view showing a negative electrode according to an example embodiment of the present disclosure;
FIG. 7 is a conceptual view for describing a degree of orientation of a negative electrode active material according to an example embodiment of the present disclosure;
FIG. 8 is a cross-sectional view showing a negative electrode according to an example embodiment of the present disclosure;
FIG. 9 is a cross-sectional view showing a negative electrode according to Comparative Example of the present disclosure;
FIG. 10 is a conceptual view for describing a method for separating a negative electrode active material layer according to an example embodiment of the present disclosure;
FIGS. 11 and 12 are each a view for describing a method for manufacturing a negative electrode according to an example embodiment of the present disclosure;
FIG. 13 is a graph showing the results of quick charging life evaluation of Example 1 and Comparative Example;
FIG. 14 is a graph showing the results of quick charging life evaluation of Example 2 and Comparative Example;
FIG. 15 is a graph showing the results of rate characteristic evaluation of Example 1;
FIG. 16 is a graph showing the results of rate characteristic evaluation of Example 2; and
FIG. 17 is a graph showing the results of rate characteristic evaluation of Comparative Example.
FIG. 18 is a flowchart illustrating a method of manufacturing a negative electrode for a rechargeable lithium battery, according to an example embodiment.

DETAILED DESCRIPTION

In order to sufficiently understand the configuration and effects of the present disclosure, example embodiments of the present disclosure are described with reference to the accompanying drawings. It should be noted, however, that the present disclosure is not limited to the following example embodiments, and may be implemented in various forms and variously modified. The example embodiments herein are provided so that the present disclosure is thorough and complete and fully conveys the scope of the present disclosure to those skilled in the art.

Herein, it is understood that when a component is referred to as being "on" another component, the component may be directly on another component, or an intervening third component may be present therebetween. In addition, in the drawings, the thickness of the elements may be exaggerated for effectively describing the technical contents. Like reference numerals refer to like elements throughout.

Unless otherwise specified herein, the expression of singular form may include the expression of plural form. In addition, unless otherwise specified, the phrase "A or B" may indicate "A but not B," "B but not A," or "A and B." The terms "comprises" and/or "comprising" used herein do not exclude the presence or addition of one or more other components.

Herein, the term "combination thereof" may refer to a mixture, a stack, a composite, a copolymer, an alloy, a blend, or a reaction product.

Herein, each of such phrases as "A or B," "at least one of A and B," "at least one of A or B," "A, B, or C," "at least one of A, B, and C," or "at least one of A, B, or C" may include any one of, or all possible combinations of the items enumerated together in a corresponding one of the phrases.

Unless otherwise defined herein, a particle diameter may be an average particle diameter. In addition, a particle diameter is defined as an average particle diameter (D50) indicating the diameter of particles having a cumulative volume of 50 volume% in the particle size distribution. The average particle diameter (D50) may be measured by a method widely known to those skilled in the art, for example, by, e.g., a particle size analyzer, a transmission electron micrograph, or a scanning electron micrograph. Alternatively, an average particle diameter (D50) value may be obtained by measuring a subject using a dynamic light-scattering-based measuring device, performing data analysis, counting the number of particles for each particle size range, and then calculating the value therefrom. Alternatively, the average particle diameter (D50) may be measured using a laser diffraction method. In the measuring using the laser diffraction method, for example, target particles are dispersed in a dispersion medium, then introduced into a commercially available laser diffraction particle diameter measuring device (e.g., MT 3000 available from Microtrac, Ltd.), and irradiated with ultrasonic waves of about 28 kHz at a power of about 60 W, and then an average particle diameter (D50) based on about 50% of the particle diameter distribution in the measuring device may be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

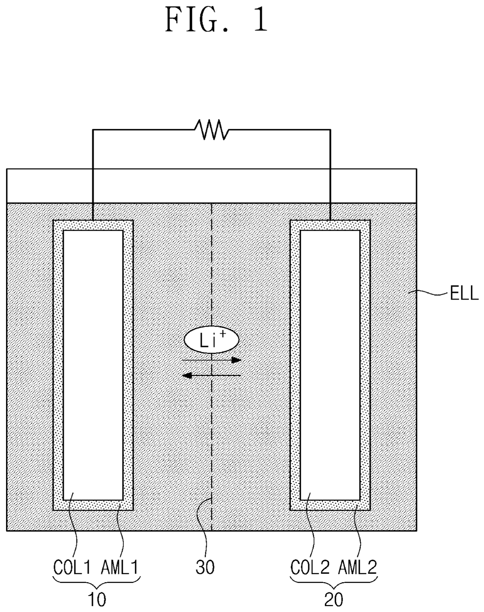

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

Positive Electrode 10

The positive electrode 10 for a rechargeable lithium battery may include a current collector COL1, and a positive electrode active material layer AML1 formed on the current collector COL1. The positive electrode active material layer AML1 may include a positive electrode active material, and may further include, e.g., a binder and/or a conductive material.

For example, the positive electrode 10 may further include an additive that can constitute a sacrificial positive electrode.

An amount of the positive electrode active material may be in a range of about 90 wt% to about 99.5 wt% relative to 100 wt% of the positive electrode active material layer AML1. An amount of each of the binder and the conductive material may be in a range of about 0.5 wt% to about 5 wt% relative to 100 wt% of the positive electrode active material layer AML1.

The binder may improve attachment of positive electrode active material particles to each other, and improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause a chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and $L^1$ may be or include at least one of Mn, Al, or a combination thereof.

For example, the positive electrode active material may be or include a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in lithium transition metal composite oxide. The high-nickel-based positive electrode active material may achieve high capacity, and thus may be applicable to a high-capacity and high-density rechargeable lithium battery.

Negative Electrode 20

The negative electrode 20 for a rechargeable lithium battery may include a current collector COL2, and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may improve attachment of negative electrode active material particles to each other, and improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause a chemical change in a battery may be used as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where $0<x<2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be present between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

Separator 30

Based on a type of the rechargeable lithium battery, the separator 30 may be present between positive electrode 10 and the negative electrode 20. The separator 30 may include at least one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one side, or on opposite sides, of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

Electrolyte ELL

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone, or in a mixture of two or more solvents.

For example, when a carbonate-based solvent is used, a cyclic carbonate and a linear carbonate may be mixed, and the cyclic carbonate and the linear carbonate may be mixed in a volume ratio in a range of about 1:1 to about 1:9.

The lithium salt may be or include a material that dissolves in the non-aqueous organic solvent to constitute a supply source of lithium ions in a battery, and enables an operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluoro-bis(oxalato)phosphate (LiDFBOP), and lithium bis(oxalato)borate (LiBOB).

Rechargeable Lithium Battery

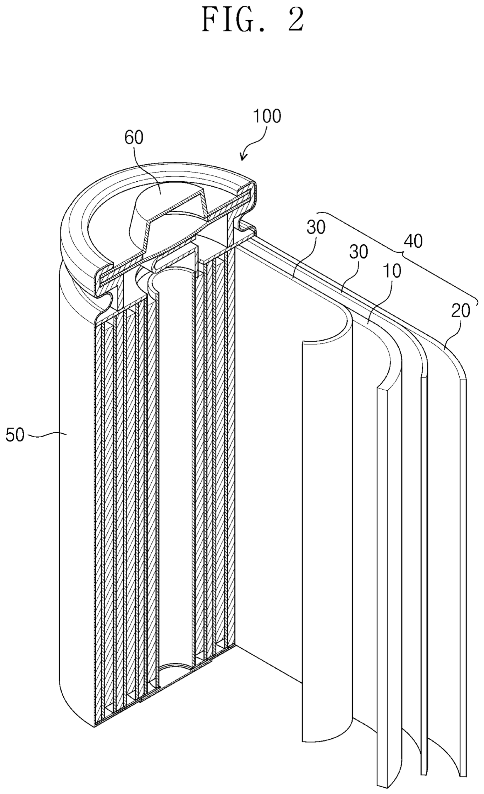

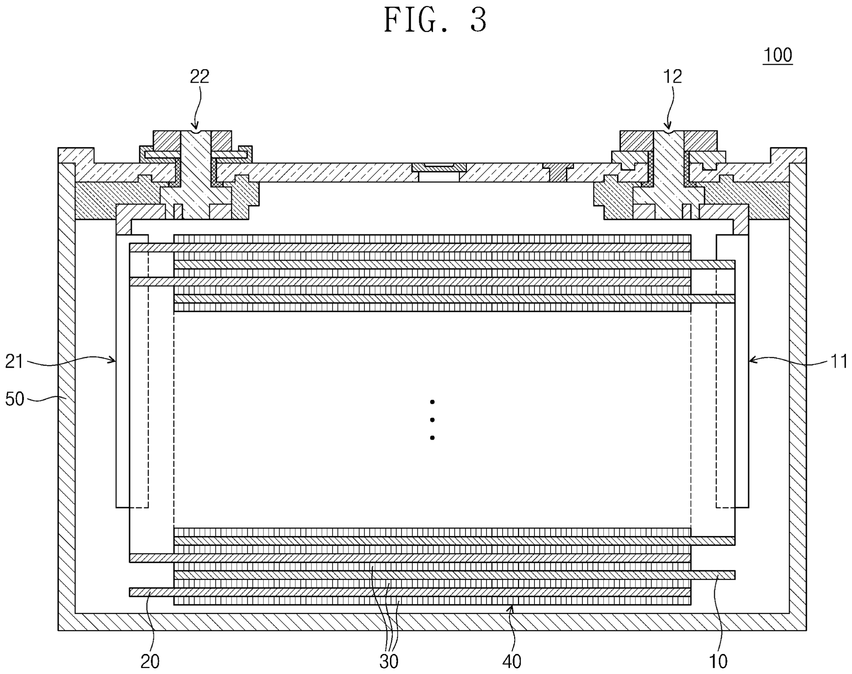

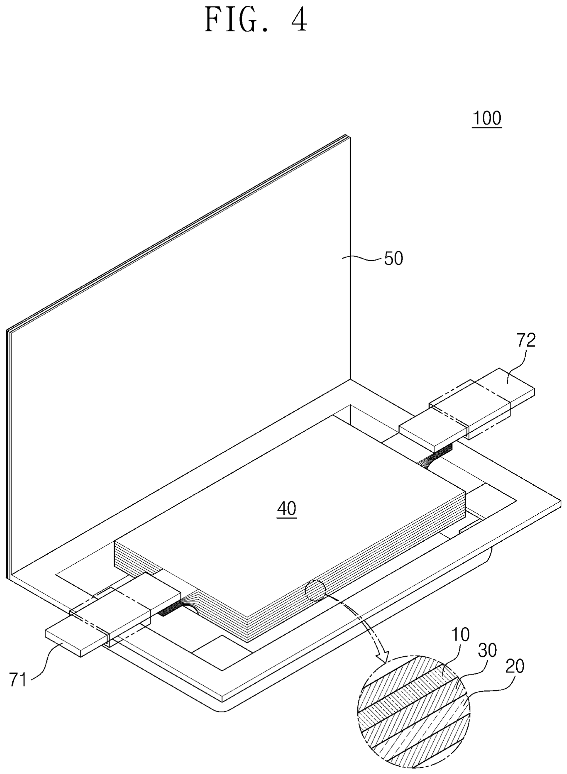

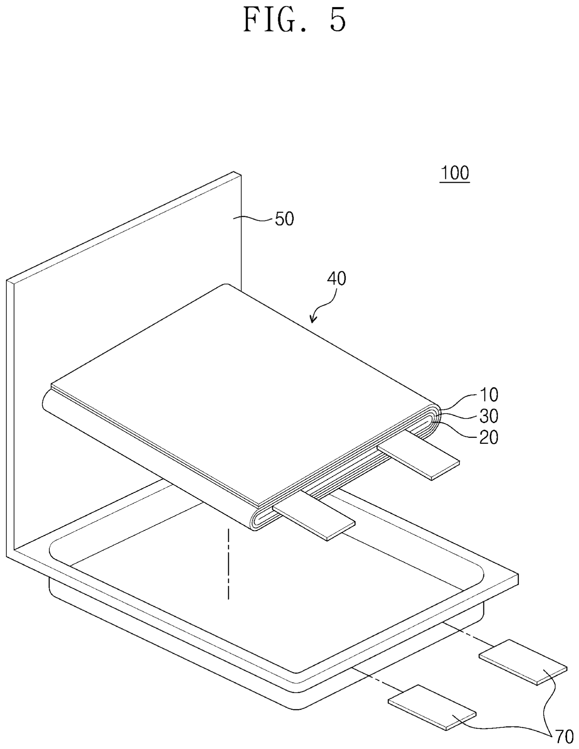

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The following describes in detail a rechargeable lithium battery according to some example embodiments of the present disclosure and an electrode included therein.

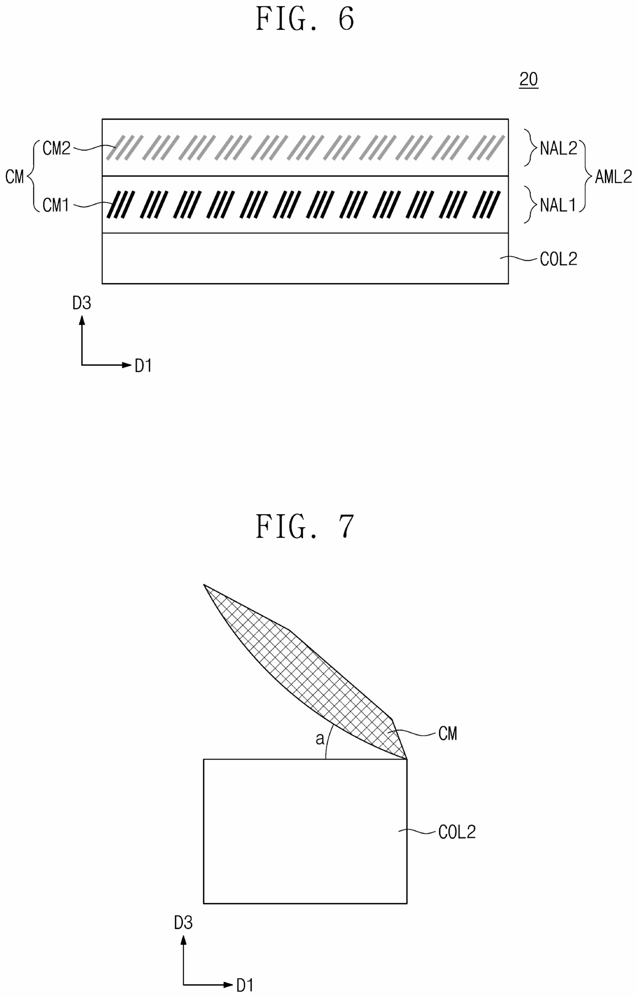

FIG. 6 is a cross-sectional view of a negative electrode according to an example embodiment of the present disclosure. Hereinafter, with reference to FIG. 6, a negative electrode according to example embodiments of the present disclosure, and a negative electrode for a rechargeable lithium battery including the same is described in more detail.

Referring to FIG. 6, a negative electrode 20 for a rechargeable lithium battery according to example embodiments of the present disclosure may include a negative electrode current collector COL2, and a first negative electrode active material layer NAL1 and a second negative electrode active material layer NAL2, which are stacked, e.g., sequentially stacked, on the negative electrode current collector COL2. For example, the first negative electrode active material layer NAL1 may be in contact with the negative electrode current collector COL2. For example, the second negative electrode active material layer NAL2 may be in contact with a separator.

The negative electrode current collector COL2 may be or include at least one of a copper foil, a nickel foil, a stainless steel foil, a titanium foil, a nickel foam, a copper foam, a polymer substrate coated with a conductive metal, or a combination thereof.

The first negative electrode active material layer NAL1 may include a first carbon-based negative electrode active material CM1. The second negative electrode active material layer NAL2 may include a second carbon-based negative electrode active material CM2. Although not shown, each of the first and second negative electrode active material layers NAL1 and NAL2 may further include a silicon-based negative electrode active material.

A carbon-based negative electrode active material CM may include, for example, crystalline carbon, amorphous carbon, or a combination thereof. Examples of the crystalline carbon may be or include graphite such as irregular, planar, flaky, spherical, or fibrous natural graphite or artificial graphite, and examples of the amorphous carbon may be or include at least one of soft carbon, hard carbon, mesophase pitch carbide, fired cokes, and the like.

For example, the carbon-based negative electrode active material CM may include artificial graphite, or a mixture of artificial graphite and natural graphite. When using a mixture of artificial graphite and natural graphite as the carbon-based negative electrode active material CM, the artificial graphite and the natural graphite may be present in a mixing ratio in a range of about 70:30 to about 95:5, or about 80:20 to about 90:10 by weight. Crystalline carbon exhibits further developed crystallographic properties than amorphous carbon, and thus when using crystalline carbon as the carbon-based negative electrode active material CM, orientation properties of a carbon material with respect to external magnetic flux may be further improved compared to when using amorphous carbon.

The carbon-based negative electrode active material CM1 included in the first negative electrode active material layer NAL1 and the carbon-based negative electrode active material CM2 included in the second negative electrode active material layer NAL2 may be the same, or may be different.

The silicon-based negative electrode active material may include at least one of silicon, a silicon-carbon composite, $SiOx$ ($0 < x \leq 2$), a Si-Q alloy (where Q is or includes at least one of an alkali metal, an alkaline earth metal, a Group 13 element, a Group 14 element (except for Si), a Group 15 element, a Group 16 element, a transition metal, a rare-earth element, and a combination thereof), or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core), in which primary silicon particles are assembled, and an amorphous carbon first coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

Each of, or at least one of, the first and second negative electrode active material layers NAL1 and NAL2 may further include a binder.

The binder may attach the negative electrode active material particles to each other, and attach the negative electrode active material to the negative electrode current collector. The binder may be or include a non-aqueous binder, an aqueous binder, or a combination thereof. When an aqueous binder is included as the negative electrode binder, a cellulose-based compound capable of imparting viscosity may be further included as a thickener.

Each of the first and second negative electrode active material layers NAL1 and NAL2 may further include a conductive material. The conductive material may impart conductivity to the electrode. Any material that does not cause chemical changes in the battery, and that is an electron conductive material, may be usable in batteries.

Each of, or at least one of, the first negative electrode active material layer NAL1 and the second negative electrode active material layer NAL2 may have a DD (degree of divergence) value defined by Equation 1 below.

$$\text{Equation 1:}$$

$$\text{DD (degree of divergence)} = (I_a/I_{total}) \times 100$$

In Equation 1 above, $I_a$ is a sum of peak intensities at non-planar angles in XRD measurement using CuK$\alpha$ radiation, and $I_{total}$ is a sum of peak intensities at all angles in XRD measurement using CuK$\alpha$ radiation.

The non-planar angles indicate $2\theta= 42.4\pm0.2°$, $43.4\pm0.2°$, $44.6\pm0.2°$, and $77.5\pm0.2°$ in XRD measurement using CuK$\alpha$ radiation, which may indicate a (100) plane, a (101)R plane, a (101)H plane, and a (110) plane. In general, graphite may be classified into a hexagonal structure having an ABAB-type stacking sequence and a rhombohedral structure depending on a stacking order of graphene layers. The R plane implies a rhombohedral structure and the H plane implies a hexagonal structure.

The all angles indicate $2\theta= 26.5\pm0.2°$, $42.4\pm0.2°$, $43.4\pm0.2°$, $44.6\pm0.2°$, $54.7\pm0.2°$, and $77.5\pm0.2°$ in XRD measurement using CuK$\alpha$ radiation, which may indicate a (002) plane, a (100) plane, a (101)R plane, a (101)H plane, a (004) plane, and a (110) plane. The peak at $2\theta= 43.4\pm0.2°$ may be an overlap of peaks from the (101)R plane of a carbon-based material and from a (111) plane of a current collector, e.g., Cu.

In general, a peak intensity value may correspond, for example, to a height value of a peak or an integral area value of a peak, and the peak intensity value according to one example embodiment may correspond to an integral area value of a peak.

In an example embodiment, the XRD measurement is performed using CuK$\alpha$ radiation as target radiation, and a monochromator is removed for improvement of peak intensity resolution, and in this case, the measurement may be performed under conditions of 2$\theta$=10° to 80°, a scan speed (°/S) of 0.044 to 0.089, and a step size (°/step) of 0.013 to 0.039.

The DD value indicates a degree of orientation of the negative electrode active material, and a larger value may indicate that the negative electrode active material is sufficiently oriented. Referring to FIG. 7, a larger DD value may indicate that an angle (a) is increased when the negative electrode active material CM is oriented at the angle (a) with respect to one surface of the negative electrode current collector COL2. This DD value may be a value that is maintained even after charging and discharging.

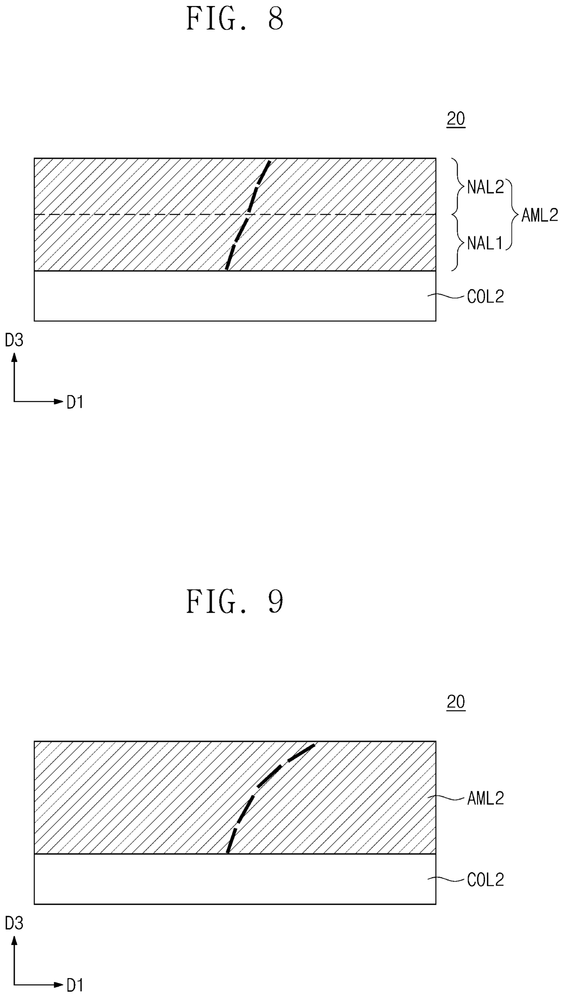

FIG. 8 is a cross-sectional view showing a negative electrode 20 according to an example embodiment of the present disclosure. Referring to FIG. 8, the negative electrode 20 according to example embodiments of the present disclosure may have a DD value that is greater than or equal to a certain value, and may exhibit a substantially uniform DD value in a thickness direction D3 of the negative electrode 20. For example, in the negative electrode 20 according to example embodiments of the present disclosure, the first negative electrode active material layer NAL1 and the second negative electrode active material layer NAL2 may have similar DD values. The DD value of the second negative electrode active material layer NAL2 may be in a range of about 60% to about 120%, about 70% to about 110%, or about 80% to about 100% of the DD value of the first negative electrode active material layer NAL1. In this case, each of, or at least one of, the first and second negative electrode active material layers may have a DD value in a range of about 19 or more.

When a difference in the DD values of the first and second negative electrode active material layers NAL1 and NAL2 is outside the range described above, the degree of orientation of the negative electrode active material in the negative electrode active material layer AML2 may become non-uniform, which may cause non-uniformity in ionic conductivity and increase electrical resistance. For example, when the degree of orientation of the negative electrode active material becomes non-uniform, a path through which lithium ions migrate within the negative electrode becomes non-uniform, and thus, lithium ion migration may be facilitated in certain regions, and may be hindered in other regions. This may reduce the charge/discharge speed and efficiency of batteries. In addition, when the degree of orientation of the negative electrode active material becomes non-uniform, a path through which electrons migrate may become longer or more complicated, which may increase the electrical resistance of the negative electrode and result in a decrease in the output of batteries.

When a difference in the DD values of the first and second negative electrode active material layers NAL1 and NAL2 satisfies the above-described range, the negative electrode active material within the negative electrode active material layer AML2 may have a substantially uniform degree of orientation, and thus, batteries may have reduced electrical resistance and enhanced charge/discharge speed. In addition, when the negative electrode active material has a substantially uniform degree of orientation, an electrochemical reaction may occur substantially evenly throughout the negative electrode. This may reduce or prevent excessive lithium insertion or extraction in certain regions, leading to improving or maximizing the utilization of the negative electrode capacity.

The first negative electrode active material layer NAL1 may have a DD value in a range of about 19 to about 60, about 30 to about 60, or about 40 to about 60. The second negative electrode active material layer NAL2 may have a DD value in a range of about 19 to about 60, about 30 to about 60, or about 40 to about 60. The negative electrode active material layer AML2 may have a total DD value in a range of about 19 to about 60, about 30 to about 60, or about 40 to about 60.

When the relationship between the DD values of the first and second negative electrode active material layers NAL1 and NAL2 satisfies the above-described range, and the DD values of each layer satisfies the above-described range, an electrolyte may be better impregnated into the negative electrode active material layer, and the lithium ion migration in the negative electrode may be facilitated, thereby improving the high-rate characteristics of the negative electrode.

In general, the negative electrode active material may be oriented through a process of exposing a negative electrode active material slurry applied onto a negative electrode current collector to a magnetic flux for a certain period of time, and then drying the exposed slurry. During the drying process, an orientation angle degrades more rapidly in regions further away from the negative electrode current collector compared to regions closer to the negative electrode current collector.

Referring to FIG. 9, which shows the negative electrode according to Comparative Example of the present disclosure, when the negative electrode active material layer AML2 is configured as a single layer, an orientation angle of the negative electrode active material exhibits a more rapid degradation with increasing distance from the negative electrode current collector COL2. Consequently, the DD value of the negative electrode active material layer decreases toward the thickness direction D3 of the negative electrode. Accordingly, the DD value in the negative electrode becomes non-uniform, and the regions closer to the negative electrode current collector may have a high orientation degree, and the regions far from the negative electrode current collector may have a low orientation degree. The non-uniformity of the degree of orientation as described above may increase with increasing thickness of the negative electrode active material layer.

Referring back to FIG. 8, the negative electrode according to example embodiment of the present disclosure may reduce or minimize the above-described decrease in the degree of orientation by configuring the negative electrode active material layer AML2 as a double layer, and may render the DD values of the negative electrode active material layer AML2 substantially uniform. That is, the negative electrode active material layer AML2 is configured as two thin layers NAL1 and NAL2 rather than a single thick layer, each layer is separately oriented, and accordingly, the decrease in the degree of orientation in each layer may be reduced or minimized, and the DD values of the entire negative electrode active material layer may be controlled to be substantially uniform.

Although each of the first and second negative electrode active material layers NAL1 and NAL2 may have a DD value that decreases in the thickness direction of the negative electrode, the decrease in the DD values may be insignificant as each of the first and second negative electrode active material layers NAL1 and NAL2 is thin. In addition, since the decrease range in the DD value within each layer is small, the DD value of the entire negative electrode active material layer AML2 may be substantially uniform.

The negative electrode active material layer AML2 according to example embodiments of the present disclosure may have a thickness in a range of about 50 $\mu$m or more. For example, the negative electrode active material layer AML2 may have a thickness in a range of about 50 $\mu$m to about 200 $\mu$m, about 60 to about 180 $\mu$m, about 70 $\mu$m to about 150 $\mu$m, or about 80 $\mu$m to about 100 $\mu$m. The negative electrode active material layer AML2 according to the present disclosure, having a double-layer structure, may exhibit a substantially uniform DD value even with a thickness of about 50 $\mu$m or more. The thickness of the negative electrode active material layer AML2 may indicate a thickness of a negative electrode after a rolling process is completed.

The negative electrode active material layer AML2 according to example embodiments of the present disclosure may have a loading level in a range of about 14 mg/cm$^2$ or more. For example, the negative electrode active material layer AML2 may have a loading level in a range of about 14 mg/cm$^2$ to about 30 mg/cm$^2$, about 16 mg/cm$^2$ to about 27 mg/cm$^2$, or about 17.2 mg/cm$^2$ to about 25 mg/cm$^2$. The loading level refers to an amount of negative electrode active material loaded on a negative electrode, which may be indicated as the mass of the negative electrode active material loaded per unit area. The negative electrode active material layer AML2 according to the present disclosure, having a double-layer structure, may exhibit a substantially uniform DD value even with a loading level of about 20 mg/cm$^2$ or more.

In example embodiments of the present disclosure, the DD value of the negative electrode active material layer AML2 may be a value obtained through, e.g., XRD measurement on a negative electrode obtained by disassembling a rechargeable lithium battery including the negative electrode 20, in a fully discharged state after charging and discharging. In this case, the charging and discharging may be performed once or twice in a range of about 0.1 C to about 0.2 C.

The DD values of the first and second negative electrode active material layers NAL1 and NAL2 may be values obtained by disassembling the battery, separating a negative electrode obtained therefrom into a first negative electrode active material layer and a second negative electrode active material layer, and performing XRD measurements on each layer.

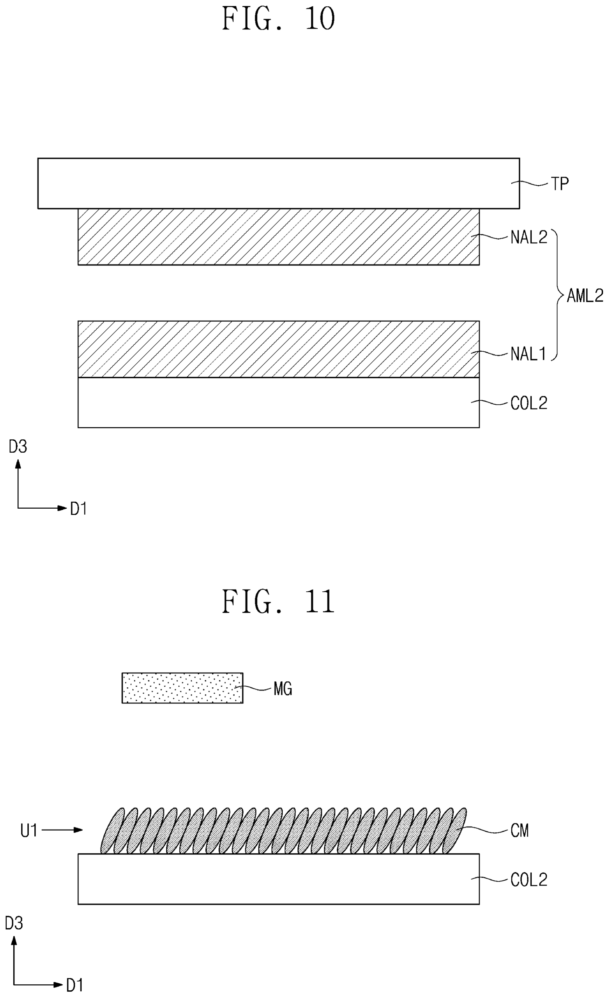

Referring to FIG. 10, when a tape TP is attached to the negative electrode active material layer AML2, and the tape TP is removed, the negative electrode active material layer AML2 may be separated into a portion attached to the tape TP and the other portion left on the negative electrode current collector COL2. In this case, the portion left on the negative electrode current collector COL1 may be the first negative electrode active material layer NAL1, and the other portion attached to the tape TP may be the second negative electrode active material layer NAL2. In this case, the thickness of the first negative electrode active material layer NAL1 may be the same as or smaller than the thickness of the second negative electrode active material layer NAL2. The thickness of the first negative electrode active material layer NAL1 may be in a range about 50% or less, or about 30% or less, of the thickness of the negative electrode active material layer AML2.

In a separated state, the portion left on the negative electrode current collector COL2 is subjected to XRD measurement to obtain a DD value of the first negative electrode active material layer NAL1, and the portion attached to the tape TP is subjected to XRD measurement to obtain a DD value of the second negative electrode active material layer NAL2.

Hereinafter, a method for manufacturing a negative electrode according to example embodiments of the present disclosure is described. The method for manufacturing a negative electrode according to example embodiments of the present disclosure includes preparing a negative electrode current collector, and forming a negative electrode active material layer on the negative electrode current collector. The forming of the negative electrode active material layer may include forming a first unit layer on the negative electrode current collector, and forming a second unit layer on the first unit layer.

As the negative electrode current collector, at least one of a copper foil, a nickel foil, a stainless steel foil, a titanium foil, a nickel foam, a copper foam, a polymer substrate coated with a conductive metal, or a combination thereof may be prepared.

Referring to FIG. 11, the forming of a first unit layer U1 may include applying and orienting a first negative electrode slurry onto one surface of the negative electrode current collector COL2. The first negative electrode slurry may include a carbon-based negative electrode active material CM. For example, the carbon-based negative electrode active material CM may include at least one of amorphous, plate-like, flake-like, spherical, or fiber-like natural graphite, artificial graphite, or a combination thereof.

The orienting of the first negative electrode slurry may include exposing the first negative electrode slurry to a magnetic flux to orient the negative electrode active material CM such that one axis thereof is tilted in a certain direction. The one axis may be a long axis of particles of the negative electrode active material CM. The orienting of particles of the negative electrode active material CM may be performed along with the applying of the first negative electrode slurry, and may be performed while moving the negative electrode current collector COL2 at a certain speed.

The magnetic flux may be formed by placing a magnet MG at a distance from the negative electrode current collector COL2. In a stationary state, a magnetic flux is formed in a direction perpendicular to the negative electrode current collector COL2 by the magnet MG, but as the current collector COL2 moves, the magnetic flux may be applied to the negative electrode active material CM at a constant angle as a vector function. Therefore, the negative electrode active material CM included in the first negative electrode slurry may be oriented at a constant, or substantially constant angle with respect to a surface of the negative electrode current collector COL2.

The magnetic flux may have a strength of, for example, in a range of about 1,000 gauss to about 10,000 gauss, about 2,000 gauss to about 8,000 gauss, or about 3,000 gauss to about 6,000 gauss. The exposure time to the magnetic flux may be within about 30 seconds. For example, the exposure time to the magnetic flux may be in a range of about 1 second to about 30 seconds, about 2 seconds to about 20 seconds, or about 3 seconds to about 10 seconds.

The first negative electrode slurry may be dried after the orienting process. The drying process may be performed at a temperature in a range of about 80°C to about 200°C. The dried first negative electrode slurry, i.e., the first unit layer U1, may maintain a constant DD value without losing the orientation.

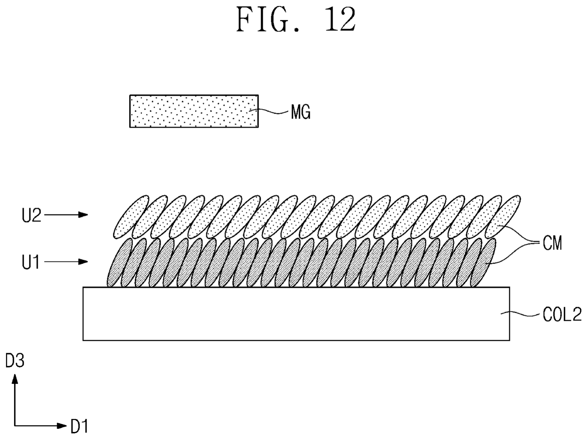

Referring to FIG. 12, the forming of a second unit layer U2 may include applying and orienting a second negative electrode slurry onto the first unit layer U1. The second negative electrode slurry may include a carbon-based negative electrode active material CM. For example, the carbon-based negative electrode active material CM may include at least one of amorphous, plate-like, flake-like, spherical, or fiber-like natural graphite, artificial graphite, or a combination thereof.

A method of orienting the second negative electrode slurry may be the same as or similar to the method of orienting the first negative electrode slurry. For example, the orienting of the second negative electrode slurry may include exposing the second negative electrode slurry to a magnetic flux to orient the negative electrode active material CM such that one axis thereof is tilted in a certain direction.

The magnetic flux may have a strength in a range of, for example, about 1,000 gauss to about 10,000 gauss, about 2,000 gauss to about 8,000 gauss, or about 3,000 gauss to about 6,000 gauss. The exposure time to the magnetic flux may be within about 30 seconds. For example, the exposure time to the magnetic flux may be in a range of about 1 second to about 30 seconds, about 2 seconds to about 20 seconds, or about 3 seconds to about 10 seconds.

The second negative electrode slurry may be dried after the orientation process. The drying process may be performed at a temperature in a range of about 80°C to about 200°C. The dried second negative electrode slurry, i.e., the second unit layer U2, may maintain a constant DD value without losing the orientation.

A rolling and drying process may be performed on a negative electrode on which the first unit layer U1 and the second unit layer U2 are formed. The drying process may be or include a vacuum drying process, and may be performed at a temperature in a range of about 100°C to about 160°C, for example, under a pressure in a range of about 0.03 atm to about 0.06 atm.

The negative electrode active material layer formed according to the manufacturing method described above may be separated into a first negative electrode active material layer and a second negative electrode active material layer. As described above with reference to FIG. 10, the first negative electrode active material layer and the second negative electrode active material layer may be separated by attaching and removing tape to/from the negative electrode active material layer. That is, when the tape is attached to the negative electrode active material layer and then removed, a portion left on the negative electrode current collector may be the first negative electrode active material layer, and the other portion attached to the tape may be the second negative electrode active material layer. The first negative electrode active material layer may be the same as, or different from, the first unit layer. The second negative electrode active material layer may be the same as, or different from, the second unit layer.

In this case, the thickness of the first negative electrode active material layer may be the same as, or smaller than, the thickness of the second negative electrode active material layer. The thickness of the first negative electrode active material layer may be in a range of about 50% or less, or about 30% or less, of the total thickness of the negative electrode active material layer.

In the negative electrode manufactured according to the example manufacturing process described above, the first negative electrode active material layer and the second negative electrode active material layer may have similar DD values. A DD value of the second negative electrode active material layer may be in a range of about 60% to about 120%, about 70% to about 110%, or about 80% to about 100% of a DD value of the first negative electrode active material layer.

The first negative electrode active material layer may have a DD value in a range of about 19 to about 60, about 30 to about 60, or about 40 to about 60. The second negative electrode active material layer may have a DD value in a range of about 19 to about 60, about 30 to about 60, or about 40 to about 60. The negative electrode active material layer may have a total DD value in a range of about 19 to about 60, about 30 to about 60, or about 40 to about 60.

When the relationship between the DD values of the first and second negative electrode active material layers satisfies the above-described range, and the DD values of each layer satisfies the above-described range, an electrolyte may be better impregnated into the negative electrode active material layer, and the lithium ion migration in the negative electrode may be facilitated, thereby improving the high-rate characteristics of the negative electrode.

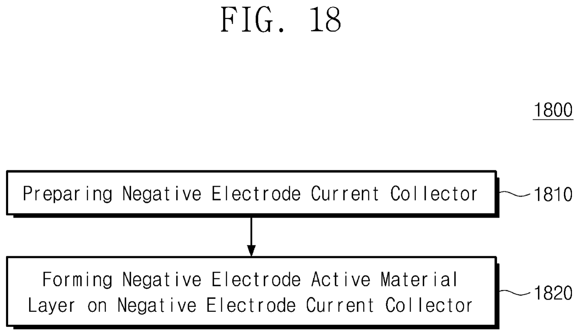

FIG. 18 is a flowchart illustrating a method of manufacturing a negative electrode for a rechargeable lithium battery, according to an example embodiment. In FIG. 18, the method 1800 includes operation 1810 which includes preparing a negative electrode current collector. Operation 1820 includes forming a negative electrode active material layer on the negative electrode current collector. For example, forming of the negative electrode active material layer includes applying and orienting a first negative electrode slurry on the negative electrode current collector to form a first unit layer, and applying and orienting a second negative electrode slurry on the first unit layer to form a second unit layer. In examples, at least one of the first negative electrode slurry and the second negative electrode slurry includes a carbon-based negative electrode active material. In another example, the negative electrode active material layer includes a first negative electrode active material layer and a second negative electrode active material layer, which are formed on the negative electrode current collector.

In another example. at least one of the first negative electrode active material layer and the second negative electrode active material layer has a DD (degree of divergence) value represented by Equation 1. In yet another example, a DD value of the second negative electrode active material layer is in a range of about 60% to about 120% of a DD value of the first negative electrode active material layer. In other examples, at least one of the first negative electrode active material layer and the second negative electrode active material layer has a DD value in a range of 19 or more. Equation 1: DD (degree of divergence) = ($I_a/I_{total}$) X 100; $I_a$ is a sum of peak intensities at $2\theta$= 42.4+0.2°, 43.4±0.2°, 44.6±0.2°, and 77.5±0.2° in XRD measurement using CuKα radiation, and $I_{total}$ is a sum of peak intensities at 2θ= 26.5±0.2°, 42.4±0.2°, 43.4±0.2°, 44.6±0.2°, 54.7±0.2°, and 77.5±0.2° in XRD measurement using CuKα radiation. In other examples, the orienting of the first negative electrode slurry includes exposing the first negative electrode slurry to a magnetic flux, and the magnetic flux has a strength in a range of about 2000 gauss to about 8000 gauss. In a further example, the forming of the first unit layer further includes drying the oriented first negative electrode slurry.

In yet a further example, the orienting of the second negative electrode slurry includes exposing the second negative electrode slurry to a magnetic flux, and the magnetic flux has a strength in a range of about 2000 gauss to about 8000 gauss. For example, the first negative electrode active material layer has a DD value in a range of about 30 to about 60, and the second negative electrode active material layer has a DD value in a range of about 30 to about 60. In another example, the carbon-based negative electrode active material includes at least one of artificial graphite, natural graphite, and a combination thereof.

Hereinafter, example embodiments of the present disclosure are described in more detail as follows. However, the example embodiments shown below are provided to assist understanding of the present disclosure, and the scope of the present disclosure is not limited to the Examples in any sense.

### Example 1

**Manufacture of Negative Electrode:**

A copper foil current collector was prepared as a negative electrode current collector. 97.5 wt% of artificial graphite, 1.5 wt% of styrene butadiene rubber (SBR), and 1.0 wt% of carboxymethyl cellulose (CMC) were mixed in a water solvent to prepare a first negative electrode slurry having a viscosity of 2000 cps (at 25°C). 97.5 wt% of artificial graphite, 1.5 wt% of styrene butadiene rubber (SBR), and 1.0 wt% of carboxymethyl cellulose (CMC) were mixed in a water solvent to prepare a second negative electrode slurry having a viscosity of 2000 cps (at 25°C).

After positioning the Cu foil under a magnet having a magnetic flux strength of 4000 gauss, the Cu foil was moved, the first negative electrode slurry was applied onto the Cu foil, exposed to a magnetic flux for 9 seconds, and then dried at 120°C for more than 1 hour to form a first unit layer having a thickness of 80 μm. The second negative electrode slurry was applied onto the first unit layer, exposed to a magnetic flux for 9 seconds, and then dried at 120°C for more than 1 hour to form a second unit layer having a thickness of 80 μm.

After the forming of the first and second unit layers, a rolling and vacuum drying process was performed to manufacture a negative electrode having a total thickness of 80 μm for the entire negative electrode active material layer.

**Manufacture of Positive Electrode:**

Aluminum foil was prepared as a positive electrode current collector. A positive electrode active material ($LiNi_{0.6}Co_{0.2}Mn_{0.2}O_2$), a carbon conductive agent (Super P), and a polyvinylidene fluoride (PVDF) binder solution were added and mixed to prepare an active material slurry. In the active material slurry, a mixing weight ratio of the active material, the conductive material, and the binder was 98:1:1. The active material slurry was applied onto an aluminum current collector, dried at 120°C for more than 1 hour, and then rolled (pressed) to prepare a positive electrode.

**Manufacture of Rechargeable Lithium Battery:**

(1) Manufacture of full cell

The prepared negative electrode, a PTFE separator, and the positive electrode were stacked to prepare a rechargeable lithium battery. As an electrolyte, one in which 1.3 M $LiPF_6$ was dissolved in a mixed solvent of ethylene carbonate (EC), ethylmethyl carbonate (EMC), and diethyl carbonate (DEC) (3:5:2 by volume ratio) was used to manufacture a single-plate pouch full cell. A single-plate pouch full cell was manufactured.

(2) Manufacture of symmetric coin cell

A symmetric coin cell was manufactured using the manufactured negative electrode as both a working electrode and a counter electrode As an electrolyte, one in which 1.3 M $LiPF_6$ was dissolved in a mixed solvent of ethylene carbonate (EC), ethylmethyl carbonate (EMC), and diethyl carbonate (DEC) (3:5:2 by volume ratio) was used to manufacture a symmetric cell.

**Example 2**

97.5 wt% of artificial graphite, 1.5 wt% of styrene butadiene rubber (SBR), and 1.0 wt% of carboxymethyl cellulose (CMC) were mixed in a water solvent to prepare a first negative electrode slurry having a viscosity of 2000 cps (at 25°C). 97.5 wt% of artificial graphite, 1.5 wt% of styrene butadiene rubber (SBR), and 1.0 wt% of carboxymethyl cellulose (CMC) were mixed in a water solvent to prepare a second negative electrode slurry having a viscosity of 2500 cps (at 25°C).
Thereafter, a negative electrode, a positive electrode, and a rechargeable lithium battery were manufactured in the same manner as in Example 1.

**Comparative Example**

97.5 wt% of artificial graphite, 1.5 wt% of styrene butadiene rubber (SBR), and 1.0 wt% of carboxymethyl cellulose (CMC) were mixed in a water solvent to prepare a negative electrode slurry having a viscosity of 2300 cps (at 25°C).
After positioning the Cu foil under a magnet having a magnetic flux strength of 4000 gauss, the Cu foil was moved, the negative electrode slurry was applied onto the Cu foil, exposed to a magnetic flux for 9 seconds, and then dried at 120°C for more than 1 hour to form a first negative electrode active material layer having a thickness of 160 $\mu$m. Thereafter, a rolling and vacuum drying process was performed to manufacture a negative electrode having a total thickness of 80 $\mu$m for the entire negative electrode active material layer.
A positive electrode and a rechargeable lithium battery were manufactured in the same manner as in Example 1.

**Evaluation Example 1: Measurement of DD value**

DD values were measured for the single-plate pouch full cells manufactured according to Examples and Comparative Examples through the following method, and the results are shown in Table 1.
The rechargeable lithium batteries manufactured according to Examples and Comparative Examples were charged and discharged twice at 0.1 C, and then fully discharged up to 2.75 V at 0.1 C. The fully discharged batteries were disassembled to obtain negative electrodes.
DD values of the entire negative electrode was obtained through XRD measurement for the disassembled negative electrode. A tape was attached to a negative electrode active material layer of the disassembled negative electrode and then removed, and a portion left on a negative electrode current collector was subjected to XRD measurement to obtain a DD value of a first negative electrode active material layer, and a portion attached to the tape was subjected to XRD measurement to obtain a DD value of a second negative electrode active material layer.

The XRD measurements were performed through X'Pert (PANalytical) XRD equipment using CuKα radiation as target radiation, and monochromator equipment was removed for improvement of peak intensity resolution. The measurements were performed under conditions of 2θ = 10° to 80°, scan speed (°/S) = 0.06436, and a step size of 0.026°/step.

Among the measured XRD results, areas of peaks at 2θ= 26.5±0.2°((002) plane), 42.4±0.2°((100) plane), 43.4 ±0.2°((101)R plane), 44.6±0.2°((101)H plane), 54.7±0.2°((004) plane), and 77.5±0.2°((110) plane) were measured, and a sum of areas of peaks at 2θ= 42.4±0.2°((100) plane), 43.4±0.2°((101)R plane), 44.6±0.2°((101)H plane), and 77.5 ±0.2°((110) plane) was set as $I_a$, and a sum of areas of peaks at 2θ= 26.5±0.2°((002) plane), 42.4±0.2°((100) plane), 43.4 ±0.2°((101)R plane), 44.6±0.2°((101)H plane), 54.7±0.2°((004) plane), and 77.5±0.2°((110) plane) was set as $I_{total}$, and DD($I_a/I_{total}$) was obtained by calculating from these values.

Table 1:

|  | DD of 1st negative electrode active material layer | DD of 2nd negative electrode active material layer | Total DD |
|---|---|---|---|
| Example 1 | 51.9 | 45.9 | 48.2 |
| Example 2 | 46.2 | 48.4 | 47.8 |
| Comparative Example | 52.79 | 26.87 | 48.7 |

**Evaluation Example 2: Evaluation of Ion Migration Resistance**

Ionic resistance (Rion) was determined from the section showing a 45° slope in a low frequency section of the Nyquist plot through electrochemical impedance spectroscopy (EIS) measurement of the symmetric coin cells manufactured according to Examples and Comparative Examples, and the results are shown in Table 2 below.

Ionic migration resistance was determined by measuring AC resistance using EIS measurement equipment of Biologics VMP3 with a frequency range of 0.1 Hz to 1 MHz and an amplitude voltage of 10 mV.

Table 2:

|  | Ion migration resistance (Ω cm) |
|---|---|
| Example 1 | 10 |
| Example 2 | 8.5 |
| Comparative Example | 14.5 |

Referring to Table 2, it is determined that the symmetrical cells according to Examples exhibit smaller resistance than the symmetrical cells according to Comparative Example.

**Evaluation Example 3: Evaluation of Quick Charging Lifespan**

Quick charging life characteristics of the single-plate pouch full cells manufactured in Examples and Comparative Example were evaluated through the following method.

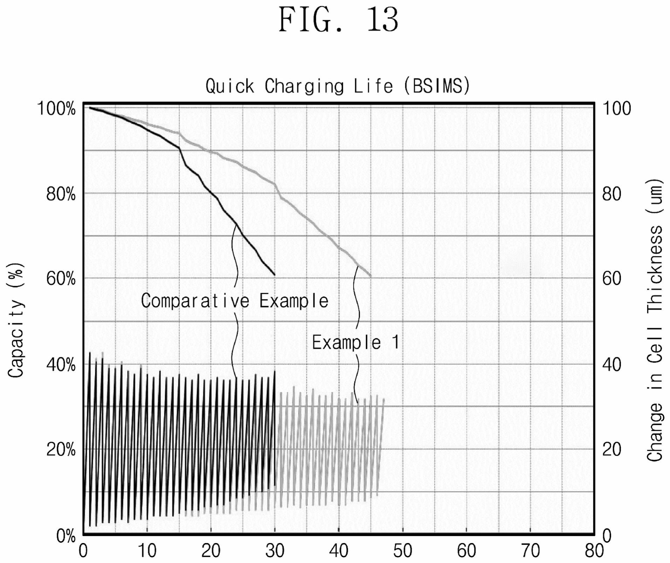

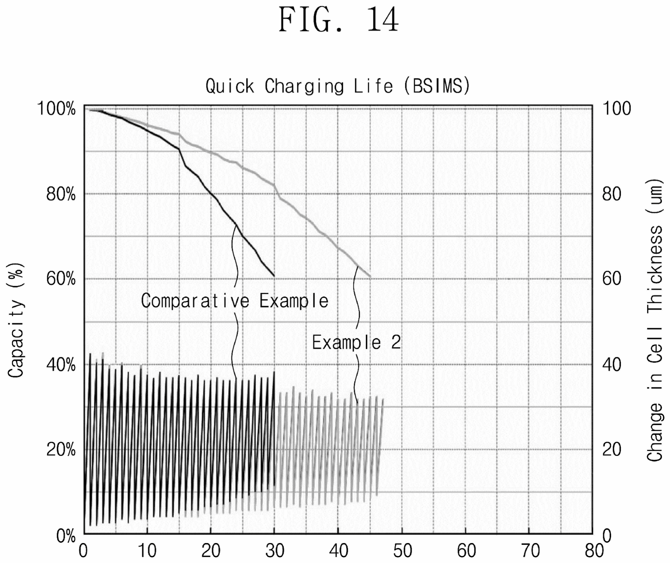

The lithium batteries were charged at a constant current of 0.2 C rate at 25°C up to 4.25 V (vs. Li), and then subjected to cut-off at 0.05 C rate while keeping the voltage of 4.25 V in a constant voltage mode. Then, the lithium batteries were discharged at a constant current of 0.2 C rate up to 2.8 V (vs. Li) (formation process). The lithium batteries subjected to the formation process were charged at a constant current of 2 C rate at 25°C up to 4.25 V (vs. Li). The lithium batteries were then discharged at a constant current of 0.2 C rate up to 2.8 V (vs. Li) (1st cycle). The charge-discharge cycles were repeated until the charge capacity reached about 60% of an initial charge capacity (1st cycle charge capacity), and the results are shown in FIGS. 13 and 14. The number of cycles performed until the charge capacity reached about 60% of the initial charge capacity was used as the quick charge life characteristics, and the results are shown in Table 3 below.

Table 3:

|  | No. of cycles |
|---|---|
| Example 1 | 45 |
| Example 2 | 45 |

(continued)

|  | No. of cycles |
|---|---|
| Comparative Example | 30 |

Referring to FIGS. 13 and 14 and Table 3, it is determined that the rechargeable lithium batteries according to Examples exhibit improved properties compared to the rechargeable lithium battery according to Comparative Example in terms of quick charging life characteristics.

**Evaluation Example 4: Evaluation of Rate Characteristics**

Rate characteristics of the single-plate pouch full cells manufactured in Examples and Comparative Examples were evaluated through the following method.

The lithium batteries were charged at a constant current of 0.1 C rate at 25°C up to 4.25 V (vs. Li), and then subjected to cut-off at 0.05 C rate while keeping the voltage of 4.25 V in a constant voltage mode. Then, the lithium batteries were discharged at a constant current of 0.1 C rate up to 2.8 V (vs. Li) (formation process). The lithium batteries subjected to the formation process were charged and discharged once at each C-rate of 0.33 C, 1 C, and 2 C at 25°C (charge voltage: 4.25 V, discharge voltage: 2.5 V), and the charge capacity at each C-rate was measured.

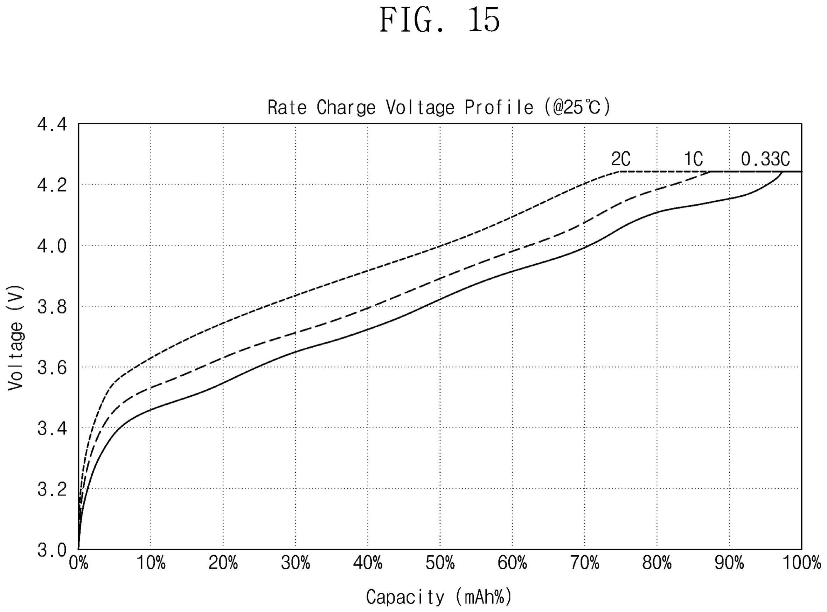

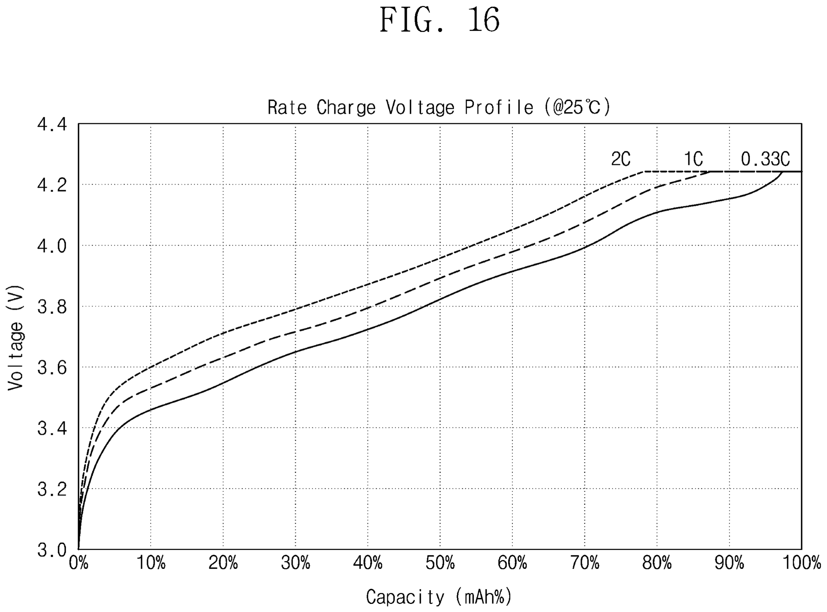

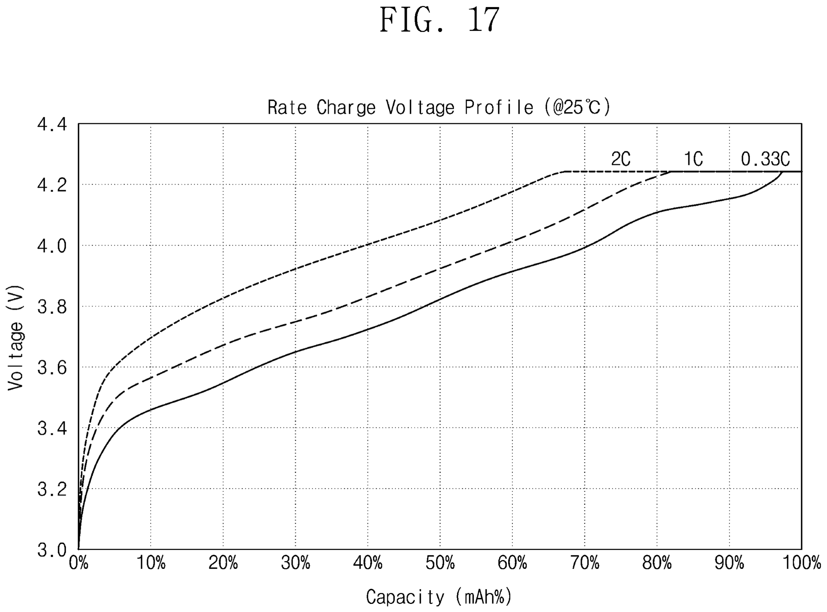

The rate characteristics were evaluated according to the following Mathematical Equation 2 below, and the results are shown in Table 2 above, and the rate charge profiles of Examples 1 and 2, and Comparative Examples are shown in FIGS. 15 to 17. FIG. 15 is a graph showing charge curves for each C-rate of Example 1, FIG. 16 is a graph showing charge curves for each C-rate of Example 2, and FIG. 17 is a graph showing charge curves for each C-rate of Comparative Examples.

Rate characteristics by C-rate [%] = [CC charge capacity at each C-rate / charge capacity at 0.33 C-rate] × 100    Equation 1:

Table 4:

|  | Rate characteristics (%) | | |
|---|---|---|---|
|  | 0.33 C | 1.0 C | 2.0 C |
| Example 1 | 97.6% | 87.6% | 74.2% |
| Example 2 | 97.3% | 86.9% | 78% |
| Comparative Example | 97.3% | 81.5% | 67% |

Referring to FIGS. 15 to 17 and Table 4, it is determined that the rechargeable lithium batteries according to Examples exhibit improved properties compared to the rechargeable lithium battery according to Comparative Example in terms of rate characteristics.

Reference Sign List

10      Positive electrode
11      Positive electrode lead tab
12      Positive electrode terminal
20      Negative electrode
21      Negative electrode lead tab
22      Negative electrode terminal
30      Separator
40      Electrode assembly
50      Casing
60      Sealing member
70      Electrode tab (general)

| 71 | Positive electrode tab |
|---|---|
| 72 | Negative electrode tab |
| 100 | Rechargeable lithium battery |
| AML1 | Positive electrode active material layer |
| AML2 | Negative electrode active material layer |
| COL1 | Positive electrode current collector |
| COL2 | Negative electrode current collector |
| ELL | Electrolyte |
| NAL1 | First negative electrode active material layer |
| NAL2 | Second negative electrode active material layer |
| CM | Carbon-based negative electrode active material (general) |
| CM1 | First carbon-based negative electrode active material |
| CM2 | Second carbon-based negative electrode active material |
| TP | Tape (used for separating layers) |
| MG | Magnet |
| U1 | First unit layer (formed from first negative electrode slurry) |
| U2 | Second unit layer (formed from second negative electrode slurry) |

**Claims**

1. A negative electrode (20) for a rechargeable lithium battery (100), the negative electrode (20) comprising:

   a negative electrode current collector (COL2); and
   a negative electrode active material layer (AML2) on the negative electrode current collector (COL2),
   wherein the negative electrode active material layer (AML2) comprises a first negative electrode active material layer (NAL1) and a second negative electrode active material layer (NAL2), which are stacked on the negative electrode current collector (COL2),
   wherein the first negative electrode active material layer (NAL1) comprises a first carbon-based negative electrode active material (CM1),
   wherein the second negative electrode active material layer (NAL2) comprises a second carbon-based negative electrode active material (CM2),
   wherein the first and the second negative electrode active material layers (NAL1, NAL2) each have a degree of divergence value, abbreviated DD value as defined by Equation 1,
   wherein the DD value of the second negative electrode active material layer (NAL2) is in a range of 60% to 120% of the DD value of the first negative electrode active material layer (NAL1), and
   wherein at least one of the first negative electrode active material layer (NAL1) and the second negative electrode active material layer (NAL2) has a DD value in a range of 19 or more,

$$\text{Equation 1:}$$

$$\text{DD (degree of divergence)} = (I_a/I_{total}) \times 100;$$

   wherein in Equation 1:

   $I_a$ is a sum of peak intensities at $2\theta = 42.4 \pm 0.2°$, $43.4 \pm 0.2°$, $44.6 \pm 0.2°$, and $77.5 \pm 0.2°$ in XRD measurement using CuK$\alpha$ radiation, and
   $I_{total}$ is a sum of peak intensities at $2\theta = 26.5 \pm 0.2°$, $42.4 \pm 0.2°$, $43.4 \pm 0.2°$, $44.6 \pm 0.2°$, $54.7 \pm 0.2°$, and $77.5 \pm 0.2°$ in XRD measurement using CuK$\alpha$ radiation.

2. The negative electrode (20) according to claim 1, wherein the first negative electrode active material layer (NAL1) has a DD value in a range of 30 to 60.

3. The negative electrode (20) according to any of the previous claims, wherein the second negative electrode active material layer (NAL2) has a DD value in a range of 30 to 60.

4. The negative electrode (20) according to any of the previous claims, wherein the negative electrode active material layer (AML2) has a DD value in a range of 40 to 60.

5. The negative electrode (20) according to any of the previous claims, wherein at least one of the first carbon-based negative electrode active material (CM1) and the second carbon-based negative electrode active material (CM2) comprises at least one of artificial graphite, natural graphite, and a combination thereof.

6. The negative electrode (20) according to any of the previous claims, wherein at least one of the first and second negative electrode active material layers (NAL1, NAL2) further comprises a silicon-based negative electrode active material.

7. The negative electrode (20) according to any of the previous claims, wherein the first negative electrode active material layer (NAL1) is in contact with the negative electrode current collector (COL2).

8. The negative electrode (20) according to any of the previous claims, wherein a thickness of the first negative electrode active material layer (NAL1) is in a range of 30% or less of a total thickness of the negative electrode active material layer (AML2).

9. The negative electrode (20) according to any of the previous claims, wherein the negative electrode active material layer (AML2) has a thickness in a range of 50 $\mu$m to 200 $\mu$m.

10. The negative electrode (20) according to any of the previous claims, wherein at least one of the first negative electrode active material layer (NAL1) and the second negative electrode active material layer (NAL2) further comprises a binder.

11. A method for manufacturing a negative electrode (20) for a rechargeable lithium battery (100), preferably a method for manufacturing a negative electrode (20) configured according to any of the previous claims 1 to 10, the method comprising:

preparing a negative electrode current collector (COL2); and
forming a negative electrode active material layer (AML2) on the negative electrode current collector (COL2), wherein the forming of the negative electrode active material layer (AML2) comprises:

applying and orienting a first negative electrode slurry on the negative electrode current collector (COL2) to form a first unit layer (U1); and
applying and orienting a second negative electrode slurry on the first unit layer (U1) to form a second unit layer (U2),

wherein at least one of the first negative electrode slurry and the second negative electrode slurry comprises a carbon-based negative electrode active material (CM),
wherein the negative electrode active material layer (AML2) comprises a first negative electrode active material layer (NAL1) and a second negative electrode active material layer (NAL2), which are formed on the negative electrode current collector (COL2),
wherein the first negative electrode active material layer (NAL1) and the second negative electrode active material layer (NAL2) each has a degree of divergence value, abbreviated DD value as defined by Equation 1, wherein the DD value of the second negative electrode active material layer (NAL2) is in a range of 60% to 120% of the DD value of the first negative electrode active material layer (NAL2), and
wherein at least one of the first negative electrode active material layer (NAL1) and the second negative electrode active material layer (NAL2) has a DD value in a range of 19 or more,

Equation 1:

$$DD \text{ (degree of divergence)} = (I_a/I_{total}) \times 100;$$

wherein in Equation 1:

$I_a$ is a sum of peak intensities at $2\theta = 42.4 \pm 0.2°$, $43.4 \pm 0.2°$, $44.6 \pm 0.2°$, and $77.5 \pm 0.2°$ in XRD measurement using CuK$\alpha$ radiation, and
$I_{total}$ is a sum of peak intensities at $2\theta = 26.5 \pm 0.2°$, $42.4 \pm 0.2°$, $43.4 \pm 0.2°$, $44.6 \pm 0.2°$, $54.7 \pm 0.2°$, and $77.5 \pm 0.2°$ in XRD measurement using CuK$\alpha$ radiation.

**12.** The method of claim 11, wherein:

the orienting of the first negative electrode slurry comprises exposing the first negative electrode slurry to a magnetic flux, and
the magnetic flux has a strength in a range of 2000 gauss to 8000 gauss.

**13.** The method according to any of claims 11 or 12, wherein the forming of the first unit layer (U1) further comprises drying the oriented first negative electrode slurry.

**14.** The method according to any of claims 11 to 13, wherein:

the orienting of the second negative electrode slurry comprises exposing the second negative electrode slurry to a magnetic flux, and
the magnetic flux has a strength in a range of 2000 gauss to 8000 gauss.

**15.** The method according to any of claims 11 to 14, wherein:

the first negative electrode active material layer (NAL1) has a DD value in a range of 30 to 60; and/or
the second negative electrode active material layer (NAL2) has a DD value in a range of 30 to 60; and/or
wherein the first negative electrode active material layer (NAL1) the same as the first unit layer (U1) and/or the second negative electrode active material layer (NAL2) is the same as the second unit layer (U2).

# FIG. 1

# FIG. 2

# FIG. 3

EP 4 749 694 A1

# FIG. 4

# FIG. 5

100

50

40

10
30
20

70

# FIG. 6

<u>20</u>

CM { CM2, CM1 }  NAL2, NAL1 } AML2  COL2

D3 → D1

# FIG. 7

CM

a

COL2

D3 → D1

# FIG. 8

20

NAL2
AML2
NAL1

COL2

D3
D1

# FIG. 9

20

AML2

COL2

D3
D1

# FIG. 10

TP

NAL2

AML2

NAL1

COL2

D3

D1

# FIG. 11

MG

U1

CM

COL2

D3

D1

# FIG. 12

# FIG. 13

# FIG. 14

# FIG. 15

Rate Charge Voltage Profile (@25℃)

EP 4 749 694 A1

# FIG. 16

Rate Charge Voltage Profile (@25℃)

EP 4 749 694 A1

# FIG. 17

Rate Charge Voltage Profile (@25℃)

FIG. 18

<u>1800</u>

```
┌─────────────────────────────────────────────────────┐
│                                                       │
│   Preparing Negative Electrode Current Collector      │ ～1810
│                                                       │
└─────────────────────────────────────────────────────┘
                          │
                          ▼
┌─────────────────────────────────────────────────────┐
│                                                       │
│      Forming Negative Electrode Active Material       │ ～1820
│     Layer on Negative Electrode Current Collector     │
│                                                       │
└─────────────────────────────────────────────────────┘
```

Europäisches
Patentamt
European
Patent Office
Office européen
des brevets

# EUROPEAN SEARCH REPORT

**Application Number**

EP 25 21 5650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/263063 A1 (LEE JINHYON [KR] ET AL) 18 August 2022 (2022-08-18)<br>* example 1 *<br>* figure 2 *<br>* paragraphs [0067], [0068] *<br>----- | 1,2,4,5, 7-15 | INV.<br>H01M4/04<br>H01M4/133<br>H01M4/1393<br>H01M4/36<br>H01M4/38<br>H01M4/587 |
| X,P | EP 4 636 843 A2 (SAMSUNG SDI CO LTD [KR]) 22 October 2025 (2025-10-22)<br>* Comparative example 2 *<br>* paragraphs [0123], [0124], [0128] *<br>----- | 1-3,5-7 | |

**TECHNICAL FIELDS SEARCHED (IPC)**

H01M

The present search report has been drawn up for all claims

| Place of search | Date of completion of the search | Examiner |
|---|---|---|
| Munich | 1 April 2026 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5650

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2026

| Patent document cited in search report | | Publication date | Patent family member(s) | | Publication date |
|---|---|---|---|---|---|
| US 2022263063 | A1 | 18-08-2022 | CN | 113711386 A | 26-11-2021 |
| | | | CN | 119208559 A | 27-12-2024 |
| | | | EP | 3961759 A1 | 02-03-2022 |
| | | | HU | E073196 T2 | 28-01-2026 |
| | | | JP | 7246520 B2 | 27-03-2023 |
| | | | JP | 2022530081 A | 27-06-2022 |
| | | | KR | 20200124514 A | 03-11-2020 |
| | | | KR | 20230075384 A | 31-05-2023 |
| | | | PL | 3961759 T3 | 03-11-2025 |
| | | | US | 2022263063 A1 | 18-08-2022 |
| | | | WO | 2020218780 A1 | 29-10-2020 |
| EP 4636843 | A2 | 22-10-2025 | CN | 120834145 A | 24-10-2025 |
| | | | EP | 4636843 A2 | 22-10-2025 |
| | | | KR | 20250152375 A | 23-10-2025 |
| | | | US | 2025323246 A1 | 16-10-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240166351